Europäisches Patentamt

European Patent Office

Office européen des brevets

(11) Numéro de publication: **0 339 641 B1**

## FASCICULE DE BREVET EUROPEEN

(45) Date de publication de fascicule du brevet: **24.02.93**  (51) Int. Cl.5: **H04B 17/00**

(21) Numéro de dépôt: **89107648.1**

(22) Date de dépôt: **27.04.89**

(54) **Procédé et dispositif d'adjonction et de séparation d'un canal numérique à bas débit au canal numérique à haut débit d'une liaison de transmission.**

(30) Priorité: **29.04.88 FR 8805750**

(43) Date de publication de la demande:
**02.11.89 Bulletin 89/44**

(45) Mention de la délivrance du brevet:
**24.02.93 Bulletin 93/08**

(84) Etats contractants désignés:
**AT BE CH DE ES FR GB IT LI NL SE**

(56) Documents cités:
**EP-A- 0 203 757**
**DE-A- 3 525 105**

(73) Titulaire: **ALCATEL CIT**
**12 Rue de la Baume**
**F-75008 Paris(FR)**

(72) Inventeur: **Le Bihan, Hervé**
**Ty Lan Bihan,Saint Laurent**
**F-22140 Begard(FR)**
Inventeur: **Ollivier François Xavier**
**75, rue de Treguier**
**F-22300 Lannion(FR)**

(74) Mandataire: **Weinmiller, Jürgen et al**
**Lennéstrasse 9 Postfach 24**
**W-8133 Feldafing (DE)**

## Description

La présente invention concerne l'adjonction et la séparation d'un canal numérique à bas débit au canal numérique à haut débit d'une liaison de transmission par surmodulation ou superposition d'amplitude dans le signal transmis en ligne.

Dans ce genre d'opérations couramment effectuées pour ajouter une voie de service à une liaison de transmission numérique, le taux de surmodulation ou de superposition d'amplitude doit être choisi de manière à permettre d'avoir les mêmes performances en taux d'erreurs pour le canal numérique à haut débit et celui à bas débit, tout en restant suffisamment faible pour que la plus grande partie de la puissance émise en ligne reste consacrée au canal numérique à haut débit.

Dans la plupart des liaisons de transmission connues, le signal du canal numérique à haut débit ne parasite pas le signal du canal numérique à bas débit car il est codé à l'aide d'un code de transmission redondant tel que les codes 5B6B, 12B1P1C ou autres, qui facilite la récupération de rythme et la détection des erreurs en ligne et qui a en outre la propriété de supprimer la composante continue et d'atténuer les composantes basses fréquences. Cela autorise un faible taux de surmodulation ou de superposition et une séparation du canal à bas débit par un simple filtrage passe-bas.

Dans les nouvelles liaisons de transmission à très haut débit telles que les liaisons de transmission par fibre optique (voir, par exemple, EP-A-0 203 757), on est conduit à abandonner le codage de transmission pour le canal numérique à haut débit car il a l'inconvénient d'augmenter encore le débit. En l'absence de ce codage, le signal du canal numérique à haut débit présente alors des composantes basses fréquences qui parasitent de manière importante le signal du canal numérique à bas débit et contre lesquelles on lutte en augmentant le taux de surmodulation ou de superposition d'amplitude et par conséquent la part de puissance émise consacrée au canal numérique à bas débit.

La présente invention a pour but de permettre l'adjonction et la séparation d'un canal numérique à bas débit au canal numérique à très haut débit d'une liaison de transmission avec un taux de surmodulation ou de superposition faible permettant de consacrer l'essentiel de la puissance émise à la transmission du canal numérique à très haut débit.

Elle a pour objet un procédé d'adjonction et de séparation d'un canal numérique à bas débit au canal numérique à haut débit d'une liaison de transmission dans lequel le signal du canal numérique à bas débit est ajouté au signal du canal numérique à haut débit dans le signal de transmission par surmodulation ou superposition d'amplitude, où le signal du canal numérique à haut débit est régénéré à partir du signal de transmission par comparaison de la valeur instantanée de l'amplitude de ce dernier signal à un niveau voisin de la moitié de l'amplitude minimale utile de sa composante de signal de canal numérique à haut débit et où le signal du canal numérique à bas débit est extrait du signal de transmission par soustraction à ce signal composite du signal régénéré du canal numérique à haut débit, après filtrage passe-bas du signal composite de transmission S (t) et du signal régénéré du canal numérique à haut débit.

L'invention a également pour objet un dispositif de mise en oeuvre du procédé précité.

D'autres caractéristiques et avantages de l'invention ressortiront de la description ci-après d'un mode de réalisation donné à titre d'exemple. Cette description sera faite en regard du dessin dans lequel :

- la figure 1 est un schéma synoptique d'un dispositif selon l'invention d'adjonction et de séparation d'un canal numérique à bas débit au canal numérique à haut débit d'une liaison de transmission par fibre optique,
- la figure 2 est un schéma synoptique d'une variante du dispositif illustré à la figure 1,
- la figure 3 est un diagramme illustrant, en fonction du temps, la forme d'un signal composite de transmission résultant d'une surmodulation de l'amplitude du signal du canal numérique à haut débit par le signal du canal numérique à bas débit et,
- la figure 4 est un diagramme illustrant, en fonction du temps, la forme d'un signal composite de transmission résultant d'une superposition des amplitudes des canaux numériques à haut et à bas débits.

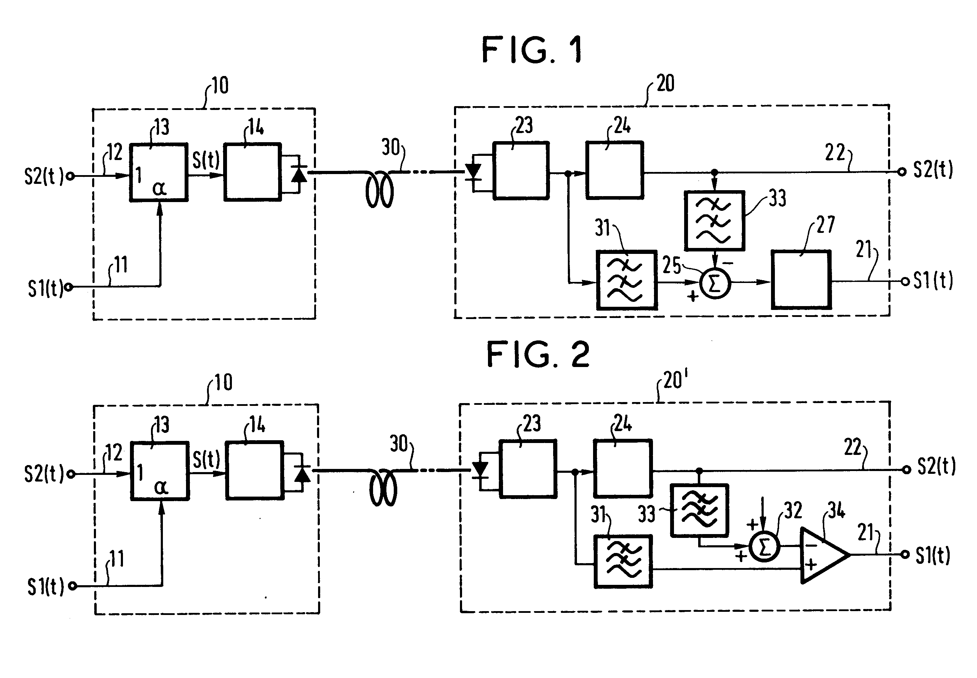

On distingue dans la figure 1 un émetteur 10 et un récepteur 20 reliés par une liaison à fibre optique 30 pour transmettre un signal S1(t) d'un canal numérique à bas débit et un signal S2(t) d'un canal numérique à haut débit appliqués à des entrées 11 et 12 de l'émetteur 10 jusqu'à des sorties distinctes 21 et 22 du récepteur 20.

L'émetteur 10 comporte en entrée, un modulateur 13 qui reçoit les signaux S1(t) et S2(t) des canaux numériques à bas et haut débits sous forme de signaux électriques binaires à deux niveaux 0 et 1 et qui engendre, de manière connue en soi, un signal électrique composite de surmodulation S(t) de la forme :

$$S(t) = (1 + \alpha\, S1(t))\, S2(t)$$

ou un signal électrique de superposition S(t) de la forme :

$$S(t) = S2(t) + \alpha\, S1(t).$$

où $\alpha$ est un taux de surmodulation ou de superposition d'amplitude. Un émetteur optique 14 placé à la suite du modulateur 13 utilise le signal électrique composite S(t) pour faire varier l'intensité lumineuse émise par une diode laser ou électroluminescente dans la liaison à fibre optique 30.

Le récepteur 20 reçoit le signal composite S(t) sous forme de variations d'intensité lumineuse transmises par la fibre optique 30 et le transforme en un signal électrique grâce à un photodétecteur préamplificateur d'entrée 23. Il comporte, à la suite du photodétecteur 23, un premier régénérateur 24 qui délivre sur la sortie 22 le signal S2(t) du canal numérique à haut débit, un soustracteur analogique 25 connecté par une entrée additive à la sortie du photodétecteur 23 via un filtre passe-bas 31 et par une entrée soustractive à la sortie du premier régénérateur 24 via un filtre passe-bas 33, et un deuxième régénérateur 27 qui est placé à la suite du soustracteur 25 et qui délivre sur la sortie 21 le signal S1(t) du canal numérique à bas débit.

Le premier régénérateur 24 peut être précédé par un filtre passe-bas non représenté avec une bande passante optimisant le rapport signal à bruit du canal numérique à haut débit, de largeur égale, par exemple, à 0,7 fois la fréquence baud du signal de ce canal. Il régénère, de la manière habituelle, le signal S2(t) du canal numérique à haut débit en comparant l'amplitude instantanée du signal composite S(t) délivré par le photodétecteur 23 à un niveau voisin de la moitié de l'amplitude minimale utile de sa composante correspondant au signal du canal numérique à haut débit. Il peut en outre resynchroniser la version du signal S2(t) disponible sur la sortie 22 avec le rythme du canal numérique à haut débit récupéré au moyen d'un oscillateur verrouillé en phase sur la position moyenne des transitions du signal composite S(t).

Le soustracteur analogique 25 élimine le talon du signal composite S(t) filtré par le filtre passe-bas 31 qui est uniquement dû au signal S2(t) du canal numérique à haut débit et qui constitue une composante parasite pour la détection du signal S1(t) du canal numérique à bas débit. Il ne conserve que la frange de surmodulation ou de superposition.

La bande passante des filtres passe-bas 31 et 33 est adaptée à la bande passante du canal numérique à bas débit, sa largeur est par exemple voisine de 0,7 fois la fréquence baud du signal de ce canal. Par ailleurs, pour obtenir en sortie du soustracteur 25 un signal ayant un rapport signal à bruit optimum, il est nécessaire d'avoir à l'entrée de ce soustracteur des signaux quasiment identiques, à la composante près du canal numérique à bas débit du signal composite. Cela est rendu possible en donnant aux filtres 31 et 33 des caractéristiques légèrement différentes permettant de compenser les allures spectrales qui ne sont pas identiques pour les deux signaux à soustraire, du fait de la différence de chemins de ces deux signaux, toujours à la composante près du canal numérique à bas débit du signal composite. Ainsi, la version régénérée du signal S2(t) du canal numérique à haut débit ayant du côté des très basses fréquences un spectre beaucoup plus riche que celui de la composante du canal numérique à haut débit en sortie du photodétecteur 23, on donne de préférence au filtre 33 une fréquence de coupure basse non nulle plus élevée que celle du filtre 31, cette dernière étant soit nulle soit non nulle mais extrêmement basse, pour compenser cette différence dans les spectres, les fréquences de coupure haute des deux filtres étant par contre identiques, égales avantageusement à 0,7 fois la fréquence baud du signal du canal numérique à bas débit. La possibilité d'ajuster le retard et l'amplitude des deux signaux à soustraire est également possible par un réglage de phase et d'atténuation du filtre 33.

Le deuxième régénérateur 27 régénère la version du signal S1(t) du canal numérique à bas débit disponible sur la sortie 21, en comparant l'amplitude instantanée de la version du signal S1(t) délivrée par le soustracteur 25 à un niveau voisin de la moitié de son amplitude moyenne. Il peut en outre resynchroniser la version du signal S1(t) disponible sur la sortie 21 avec le rythme du canal numérique à bas débit récupéré au moyen d'un oscillateur verrouillé en phase sur la position moyenne des transitions du signal délivré par le soustracteur 25.

L'élimination de la plus grande partie du bruit provoqué par la présence du signal S2(t) du canal numérique à haut débit dans le signal composite de transmission S(t) permet de diminuer le taux de surmodulation ou de superposition et la puissance émise consacrée au canal numérique à bas débit. C'est ainsi que pour un même taux d'erreurs sur le canal numérique à bas débit, la présence du soustracteur analogique 25 permet de ramener par exemple le taux de surmodulation de 22 % à 3,5 % seulement pour un rapport bas débit sur haut débit égal à $8 \times 10^{-4}$. Par la même occasion, le parasitage du canal numérique à haut débit par le canal numérique à bas débit diminue et passe de 1 db à moins de 0,15 db.

Un autre avantage découle du filtrage adapté fait sur les deux signaux à soustraire. En effet, à la sortie des filtres 33 et 31, les signaux sont dans la bande des fréquences du signal du canal numérique à bas débit ; ceci permet d'effectuer la soustraction de ces deux signaux à l'aide de circuits électroniques basse fréquence.

La figure 2 illustre une variante du dispositif de la figure 1 dans laquelle les éléments inchangés ont conservé les mêmes références. Cette variante ne diffère qu'au niveau du récepteur 20', par la constitution des circuits d'extraction et de régénération du signal S1(t) du canal numérique à bas débit. Ces circuit se composent d'un comparateur 34 formé d'un amplificateur différentiel à grand gain qui délivre sur la sortie 21 le signal S1(t) du canal numérique à bas débit et qui a son entrée non inverseuse reliée à la sortie du photodétecteur 23 par l'intermédiaire du filtre passe-bas 31 et son entrée inverseuse reliée à la sortie du premier régénérateur 24 par l'intermédiaire d'un additionneur 32 et du filtre passe-bas 33.

Le comparateur 34 réalise à la fois l'extraction du signal S1(t) du canal numérique à bas débit et sa première étape de régénération qui consiste à lui redonner une forme binaire avant de le resynchroniser. Pour ce faire, il soustrait du signal composite de transmission S(t) préalablement filtré pour ne laisser subsister que la bande des fréquences du canal numérique à bas débit, le signal régénéré S2(t) du canal numérique à haut débit qui est également filtré pour ne laisser subsister que la bande des fréquences du canal numérique à bas débit et auquel on a ajouté un niveau de seuil de décision.

L'additionneur 32 est un additionneur à résistances qui permet d'additionner le niveau de seuil de décision aux composantes basses fréquences du signal régénéré S2(t) du canal numérique à haut débit et donc de soustraire ce niveau de seuil des composantes basses fréquences de la différence entre les signaux S(t) et S2(t) effectuée par le comparateur 34.

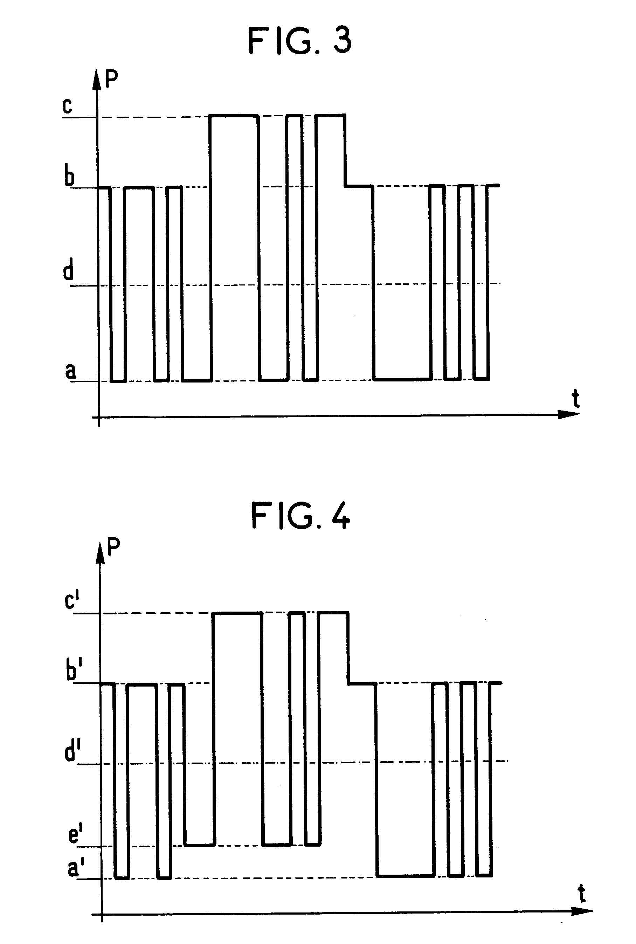

La figure 3 illustre la forme du signal composite S(t) émis en ligne sur la fibre optique 30 en cas de surmodulation d'amplitude. Ce signal composite est un signal rectangulaire à trois niveaux :
un niveau inférieur a correspondant aux états logiques 0 simultanés des signaux S1(t) et S2(t) des canaux numériques à bas et haut débits, un niveau intermédiaire b correspondant aux états logique 1 du signal S2(t) du canal numérique à haut débit coïncidant avec un état logique 0 du signal S1(t) du canal numérique à bas débit, et un niveau supérieur c correspondant aux états logiques 1 du signal S2(t) du canal numérique à haut débit coïncidant avec un état logique 1 du signal S1(t) du canal numérique à bas débit. Le taux de surmodulation $\alpha$ correspond au rapport :

$$\alpha = \frac{c - b}{b - a}$$

La ligne de pointillés d tracée à mi-hauteur entre les niveaux a et b situe le niveau de comparaison utilisé par le premier régénérateur 24.

La figure 4 illustre la forme du signal composite S(t) émis en ligne sur la fibre optique 30 en cas de superposition d'amplitude. Ce signal composite est un signal rectangulaire à quatre niveaux :
un niveau inférieur extrême a' correspondant aux états logiques 0 simultanés des signaux S1(t) et S2(t) des canaux numériques à bas et haut débits, un niveau intermédiaire inférieur e' correspondant aux états logiques 0 du signal S2(t) du canal numérique à haut débit coïncidant avec des états logiques 1 du signal S1(t) du canal numérique à bas débit, un niveau intermédiaire supérieur b' correspondant aux états logiques 1 du signal S2(t) du canal numérique à haut débit coïncidant avec un état logique 0 du signal S1(t) du canal numérique à bas débit, et un niveau supérieur extrême c' correspondant aux états logiques 1 simultanés des signaux S1(t) et S2(t) des canaux numériques à bas et à haut débits. La ligne de pointillés d' tracée à mi hauteur entre les niveaux e' et b' situe le niveau de comparaison utilisé par le premier régénérateur 24.

On peut, sans sortir du cadre de l'invention modifier certaines dispositions au remplacer certains moyens par des moyens équivalents.

**Revendications**

1. Procédé d'adjonction et de séparation d'un canal numérique à bas débit au canal numérique à haut débit d'une liaison de transmission dans lequel le signal S1(t) du canal numérique à bas débit est ajouté au signal S2(t) du canal numérique à haut débit dans un signal composite de transmission S(t) par surmodulation ou superposition d'amplitude et où le signal S2(t) du canal numérique à haut débit est régénéré à partir du signal composite de transmission S(t) par comparaison de la valeur instantanée d'amplitude de ce dernier signal S(t) à un niveau (d, d') voisin de la moitié de l'amplitude minimale utile de la composante du signal S2(t) du canal numérique à haut débit dans le signal composite de transmission S(t), caractérisé en ce que le signal S1(t) du canal numérique à bas débit est extrait du signal composite de transmission S(t) par soustraction à ce signal composite du signal régénéré S2(t) du canal numérique à haut débit, après filtrage passe-bas du signal composite de transmission S(t) et du signal régénéré S2(t) du canal numérique à haut débit.

2. Procédé selon la revendication 1, caractérisé en ce que le filtrage passe-bas du signal régénéré du canal numérique à haut débit se fait avec une fréquence de coupure basse non nulle plus élevée que pour le filtrage passe-bas du signal composite de transmission

**3.** Procédé selon selon l'une des revendications 1 et 2, caractérisé en ce qu'il est prévu un réglage de phase et d'atténuation relative des deux signaux ainsi filtrés.

**4.** Procédé selon l'une des revendications 1 à 3, caractérisé en ce que le signal S1(t) du canal numérique à bas débit, après avoir été extrait du signal composite de transmission S(t) est régénéré par comparaison de la valeur instantanée de son amplitude avec un niveau voisin de la moitié de son amplitude moyenne.

**5.** Dispositif pour la mise en oeuvre du procédé selon l'une des revendications 1 à 4 comportant, à l'émission, des moyens (13) de surmodulation ou de superposition en amplitude du signal S1(t) du canal numérique à bas débit sur le signal S2(t) du canal numérique à haut débit délivrant un signal composite de transmission S(t) et, à la réception, des moyens de régénération (24) du signal S2(t) du canal numérique à haut débit à partir du signal composite de transmission S(t) par comparaison de la valeur instantanée d'amplitude de ce dernier signal S(t) à un niveau (d, d') voisin de la moitié de l'amplitude minimale utile de la composante dans ce signal composite S(t) due au signal S2(t) du canal numérique à haut débit, caractérisé en ce qu'il comporte en outre, en réception, des premiers moyens de filtrage passe-bas (31) opérant sur le signal composite S(t), des deuxièmes moyens de filtrage passe-bas (33) opérant sur le signal régénéré S2(t) du canal numérique à haut débit et des moyens (25) pour soustraire le signal fourni par les deuxièmes moyens de filtrage passe-bas de celui fourni par les premiers moyens de filtrage passe-bas.

**6.** Dispositif selon la revendication 5, caractérisé en ce qu'il comporte en outre des moyens pour régénérer le signal différence obtenu constituant le signal S1(t) du canal numérique à bas débit par comparaison de sa valeur instantanée d'amplitude avec un niveau voisin de la moitié de son amplitude moyenne.

**7.** Dispositif selon la revendication 6, caractérisé en ce que lesdits moyens (25, 27) de soustraction et de régénération comportent un amplificateur différentiel (34) ayant son entrée non inverseuse connectée en sortie des premiers moyens de filtrage passe-bas et son entrée inverseuse connectée en sortie des deuxièmes moyens de filtrage passe-bas, et un additionneur (32) qui est intercalé entre la sortie des deuxièmes moyens de filtrage passe-bas et l'entrée inverseuse de l'amplificateur différentiel et qui ajoute au signal délivré par les deuxièmes moyens de filtrage passe-bas un niveau continu de seuil de régénération.

**8.** Dispositif selon la revendication 7, caractérisé en ce que ledit additionneur (32) est un additionneur à résistances.

**Claims**

**1.** A method of combining and separating a low data rate digital channel with or from the high data rate digital channel of a transmission link in which the low data rate digital channel S1(t) is combined with the high data rate digital channel signal S2(t) in a composite transmission S(t) by overmodulation or by amplitude superposition, and in which the high data rate digital channel signal S2(t) is regenerated from the composite transmission S(t) by comparing the instantaneous amplitude value of said signal S(t) with a level (d, d') close to one half of the minimum useful amplitude of the component of the high data rate digital channel signal S2(t) in the composite transmission S(t), the method being characterized in that the low data rate digital channel signal S2(t) is extracted from the composite transmission S(t) by subtracting the regenerated high data rate digital channel signal S2(t) from the composite signal after both the composite transmission signal S(t) and the regenerated high data rate digital channel signal S2(t) have been subjected to lowpass filtering.

**2.** A method according to claim 1, characterized in that the regenerated high data rate digital channel signal is subjected to lowpass filtering with a non-zero low-frequency cutoff which is higher than that used for the lowpass filtering of the composite transmission signal.

**3.** A method according to claim 1 or 2, characterized in that means are provided for adjusting the relative phase and attenuation of the two signals filtered in this way.

**4.** A method according to any one of claims 1 to 3, characterized in that the low data rate digital channel signal S1(t) is regenerated after being extracted from the composite transmission signal S(t) by comparing the instantaneous value of its amplitude with a level close to one-half of its mean amplitude.

5. Apparatus for implementing the method according to any one of claims 1 to 4, the apparatus comprising, on transmission, transmission means (13) for combining the low data rate digital channel signal S1(t) with the high data rate digital channel signal S2(t) by overmodulation or by amplitude superposition and delivering a composite transmission signal S(t), and, on reception, regeneration means (24) for regenerating the high data rate digital channel signal S2(t) from the composite transmission channel signal S(t) by comparing the instantaneous value of the amplitude of said composite transmission signal S(t) with a level (d, d') close to one-half of the minimum useful amplitude of the component in said composite signal S(t) due to the high data rate digital channel signal S2(t), the apparatus being characterized in that it further includes, on reception, first lowpass filter means (31) operating on the composite signal S(t), second lowpass filter means (33) operating on the regenerated high data rate digital channel signal S2(t), and subtraction means (25) for subtracting the signal delivered by the second lowpass filter means from the signal delivered by the first lowpass filter means.

6. Apparatus according to claim 5, characterized in that it further includes regeneration means for regenerating the resulting difference signal constituting the low data rate digital channel signal S1(t) by comparing the instantaneous value of its amplitude with a level close to one-half of its mean amplitude.

7. Apparatus according to claim 6, characterized in that said subtraction and regeneration means (25, 27) comprise a differential amplifier (34) having its non-inverting input connected to the output of the first lowpass filter means and having its inverting input connected to the output of the second lowpass filter means, together with an adder (32) which is interposed between the output of the second lowpass filter means and the inverting input of the differential amplifier and which adds a D.C. regeneration threshold level to the signal delivered by the second lowpass filter means.

8. Apparatus according to claim 7, characterized in that the adder (32) is constituted by a resistor circuit.

**Patentansprüche**

1. Verfahren zum Beifügen und Abtrennen eines digitalen Kanals mit geringem Durchsatz an einen bzw. von einem digitalen Kanal hohen Durchsatzes einer Übertragungsstrecke, bei dem das Signal S1(t) des digitalen Kanals geringen Durchsatzes dem Signal S2(t) des Kanals hohen Durchsatzes durch Übermodulation oder Amplitudenüberlagerung zu einem zusammengesetzten Übertragungssignal S(t) hinzugefügt wird, und wobei das Signal S2(t) des digitalen Kanals hohen Durchsatzes aus dem zusammengesetzten Übertragungssignal S(t) durch Vergleich des Amplitudenmomentanwertes des letztgenannten Signals S(t) mit einem Pegel (d, d') regeneriert wird, der in der Nähe der halben nutzbaren Minimalamplitude der Komponente des Signals S2(t) des digitalen Kanals hohen Durchsatzes im zusammengesetzten Übertragungssignal S(t) liegt, dadurch gekennzeichnet, daß das Signal S1(t) des digitalen Kanals geringen Durchsatzes aus dem zusammengesetzten Übertragungssignal S(t) durch Subtrahieren des regenerierten Signals S2(t) des digitalen Datenkanals hohen Durchsatzes vom zusammengesetzten Signal nach einer Tiefpaßfilterung des zusammengesetzten Übertragungssignals S(t) und des regenerierten Signals S2(t) des digitalen Kanals hohen Durchsatzes entnommen wird.

2. Verfahren nach Anspruch 1, dadurch gekennzeichnet, daß die Tiefpaßfilterung des regenerierten Signals des digitalen Kanals hohen Durchsatzes mit einer von Null verschiedenen niedrigen Grenzfrequenz erfolgt, die höher als diejenige für die Tiefpaßfilterung des zusammengesetzten Übertragungssignals ist.

3. Verfahren nach Anspruch 1 oder 2, dadurch gekennzeichnet, daß eine relative Phasen- und Dämpfungsregelung der beiden so gefilterten Signale vorgesehen ist.

4. Verfahren nach einem der Ansprüche 1 bis 3, dadurch gekennzeichnet, daß das Signal S1(t) des digitalen Kanals geringen Durchsatzes nach der Entnahme aus dem zusammengesetzten Übertragungssignal S(t) durch Vergleichen des Momentanwertes seiner Amplitude mit einem Pegel regeneriert wird, der in der Nähe der Hälfte seiner mittleren Amplitude liegt.

5. Einrichtung zur Durchführung des Verfahrens nach einem der Ansprüche 1 bis 4, die sendeseitig Mittel (13) zur Übermodulation oder zur Amplitudenüberlagerung des Signals S1(t) des digitalen Kanals mit geringem Durchsatz über das Signal S2(t) des digitalen Kanals hohen Durchsatzes unter Lieferung eines zusammengesetzten Übertragungssignals S(t) aufweist, und die empfangsseitig Mittel (24) zum Regenerieren des Signals S2(t) des digitalen Kanals hohen Durchsatzes aus dem zusammengesetzten Übertragungssignal S(t) durch Vergleichen des Amplitudenmomentanwertes des letztgenannten Signals S(t) mit einem Pegel (d, d') aufweist, der in der Nähe der halben nutzbaren Minimalamplitude der Komponente im zusammengesetzten Signal S(t) aufgrund des Signals S2(t) des digitalen Kanals großen Durchsatzes liegt, dadurch gekennzeichnet, daß die Einrichtung weiter empfangsseitig erste auf das zusammengesetzte Signal S(t) einwirkende Tiefpaßfiltermittel (31), zweite auf das regenerierte Signal S2(t) des digitalen Kanals hohen Durchsatzes einwirkende Tiefpaßfiltermittel (33), und Mittel (25) zum Subtrahieren des von den zweiten Tiefpaßfiltermitteln gelieferten Signals von dem durch die ersten Tiefpaßfiltermittel gelieferten Signal aufweist.

6. Einrichtung nach Anspruch 5, dadurch gekennzeichnet, daß sie weiter Mittel zum Regenerieren der erhaltenen Differenzsignals, das das Signal S1(t) des digitalen Kanals geringen Durchsatzes bildet, durch Vergleichen seines Amplitudenmomentanwertes mit einem Pegel aufweist, der in der Nähe der Hälfte seiner mittleren Amplitude liegt.

7. Einrichtung nach Anspruch 6, dadurch gekennzeichnet, daß die Subtraktions- und Regeneriermittel (25, 27) einen Differentialverstärker (34), dessen nichtinvertierender Eingang an den Ausgang der ersten Tiefpaßfiltermittel und dessen invertierender Eingang an den Ausgang der zweiten Tiefpaßfiltermittel angeschlossen ist, und ein Addierglied (32) aufweisen, das zwischen den Ausgang der zweiten Tiefpaßfiltermittel und den invertierenden Eingang des Differentialverstärkers geschaltet ist und das dem von den zweiten Tiefpaßfiltermitteln gelieferten Signal einen konstanten Regenerierschwellenpegel zufügt.

8. Einrichtung nach Anspruch 7, dadurch gekennzeichnet, daß das Addierglied (32) ein Widerstandsaddierer ist.

# FIG. 1

# FIG. 2

EP 0 339 641 B1

# FIG. 3

# FIG. 4